# EUROPEAN PATENT APPLICATION

(11) **EP 4 796 373 A1**
(43) Date of publication of application: **26.08.2026**
(21) Application number: 26157926.2
(22) Date of filing: 11.02.2026
(51) Int. Cl.: B60L 53/16, H01R 13/639

(54) **EMERGENCY RELEASE MECHANISM**

(30) Priority: 21.02.2025 US 202563761225 P; 12.06.2025 US 202563822491 P; 09.01.2026 US 202619444442
(71) Applicant: Aptiv Technologies AG, 8200 Schaffhausen (CH)
(72) Inventor: PECHATSKO, John Walter, 8200 Schaffhausen (CH); ILER, Troy A., 8200 Schaffhausen (CH); FERRY, Richard, 8200 Schaffhausen (CH)
(74) Representative: Bardehle Pagenberg Partnerschaft mbB Patentanwälte Rechtsanwälte

(57) **Abstract**

A release assembly includes an interactive member configured to be partially disposed within a guide portion of a housing and translatable relative to the housing between a first position and a second position. The interactive member includes a first end and a second end. The first end is configured to be exposed at a first side of the housing. The second end includes a receiver configured to movably-engage a release arm to move the release arm from a locked position to an unlocked position when moved from the first position to the second position.

## Description

### Cross-Reference to Related Applications

This application claims the benefit of U.S. Provisional Application No. 63/822,491 filed June 12, 2025 and U.S. Provisional Application No. 63/761,225 filed February 21, 2025. The entire disclosures of the above applications are incorporated herein by reference.

### Field

The present disclosure relates to an emergency release mechanism and more particularly to an emergency release mechanism for a charging port of an electric vehicle.

### Background

Traditionally, a pull-cable system is used to operate an emergency release function. This system requires a long cable with a user-accessible feature-such as a looped end-for manual operation. However, the looped end is often located in an inconvenient area, such as the trunk, hatch, or under the front hood, far from the charge port. Additionally, the pull-cable system poses a risk of damaging the actuator if used improperly. A damaged actuator can prevent proper operation of the charging system, necessitating service. To address these issues, a common approach is to eliminate the pull-cable system altogether and provide either no access or limited hand access to the actuator's emergency release lever in emergency situations. These alternatives also have their own drawbacks and limitations. While traditional emergency release mechanisms have proven acceptable for their intended use, a continuous need for improvement exists in the art.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### Summary

One aspect of the present disclosure provides a release assembly. The release assembly includes an interactive member configured to be partially disposed within a guide portion of a housing and translatable relative to the housing between a first position and a second position. The interactive member includes a first end and a second end. The first end is configured to be exposed at a first side of the housing. The second end includes a receiver configured to movably-engage a release arm to move the release arm from a locked position to an unlocked position when moved from the first position to the second position.

Further areas of applicability of the present disclosure will become apparent from the detailed description, the claims, and the drawings. The detailed description and specific examples are intended for purposes of illustration only and are not intended to limit the scope of the disclosure.

### Brief Description Of The Drawings

The present disclosure will become more fully understood from the detailed description and the accompanying drawings.
FIG. 1A is a perspective view of a charging system including a release assembly in a first position according to the principles of the present disclosure.
FIG. 1B is a perspective view of the charging system of FIG. 1A including the release assembly in a second position.
FIG. 2A is a plan view of the release assembly of FIG. 1A in the first position.
FIG. 2B is a plan view of the release assembly of FIG. 1A in the second position.
FIG. 3 is an exploded view of the charging system of FIG. 1A.
FIG. 4 is another perspective view of the charging system of FIG. 1A.
FIG. 5 is a perspective view of another release assembly according to the principles of the present disclosure.
FIG. 6A is a plan view of the release assembly of FIG. 5 in a first position.
FIG. 6B is a plan view of the release assembly of FIG. 5 in a second position.
FIG. 7 is an exploded view of the release assembly of FIG. 5.

In the drawings, reference numbers may be reused to identify similar and/or identical elements.

### Detailed Description

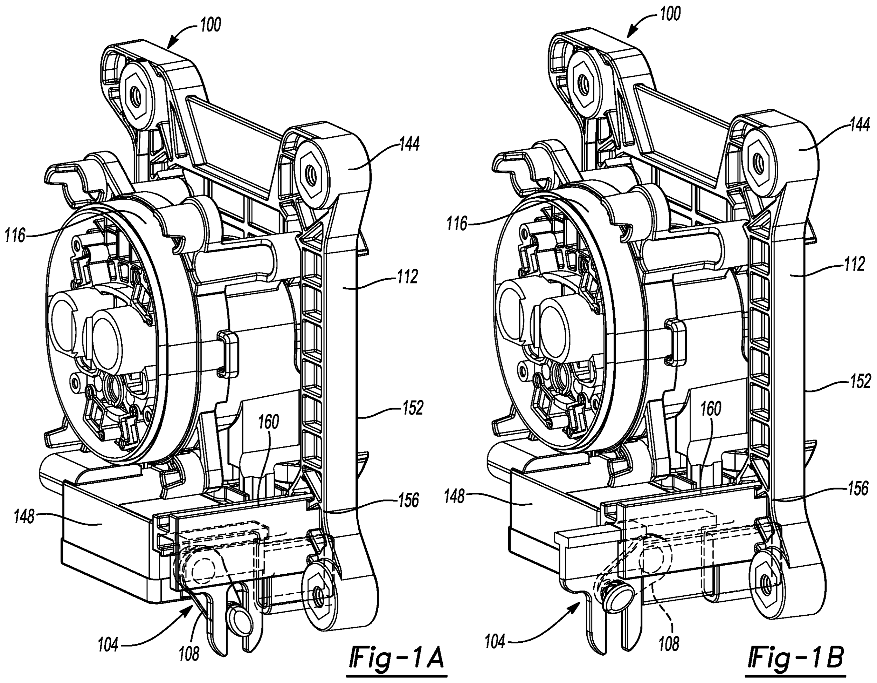

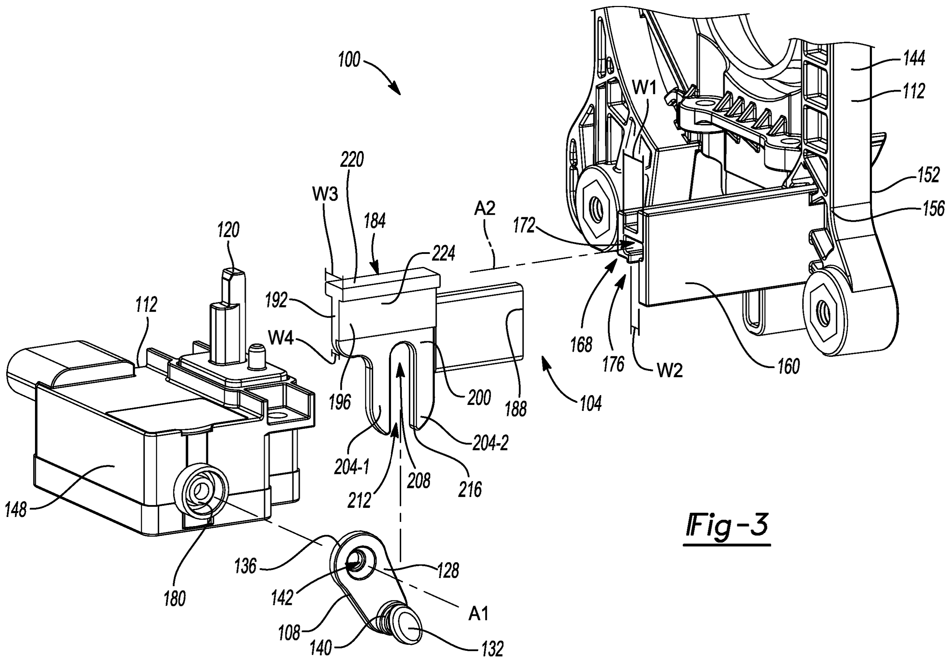

FIGS. 1A-4 illustrate a charging system 100. As will be explained in more detail below, the charging system 100 may be connected (e.g., electrically-connected) to an electrical system of a vehicle (e.g., an automobile, not shown), such as an electric vehicle to facilitate the transmission of electricity from a charger (not shown) to a storage component of the electrical system, such as a battery. The charging system 100 may be installed on or within the vehicle. For example, the charging system 100 may be disposed on or integrated into a body panel of the vehicle, such that a portion of the charging system 100 is accessible to a person (e.g., the driver of the vehicle) from outside the vehicle.

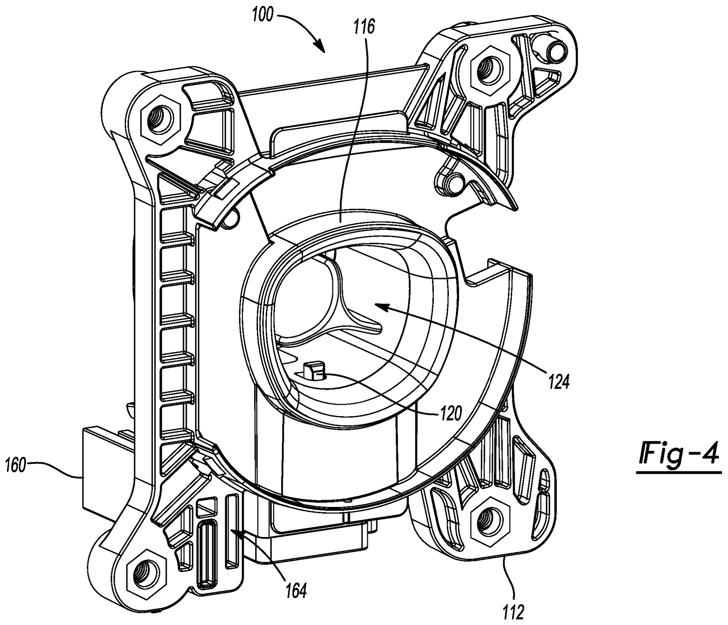

The charging system 100 may include a release assembly 104, a release arm 108, a housing 112, a charging receptacle 116, and a lock tab 120. The release assembly 104 may be coupled (e.g., translatably-coupled) to the release arm 108 and/or the housing 112. The release arm 108 may be coupled (e.g., rotatably-coupled) to the housing 112. The housing 112 may be coupled (e.g., detachably-coupled) to the charging receptacle 116. In an assembled configuration (FIG. 4), the lock tab 120 may be disposed within the charging receptacle 116. The lock tab 120 may be coupled (e.g., operatively-coupled) to the release arm 108.

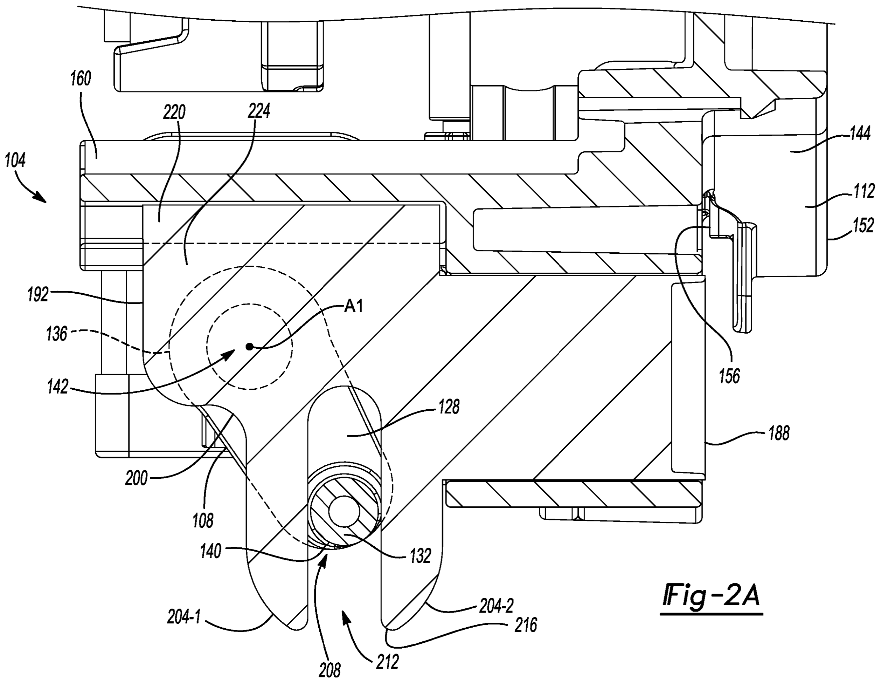

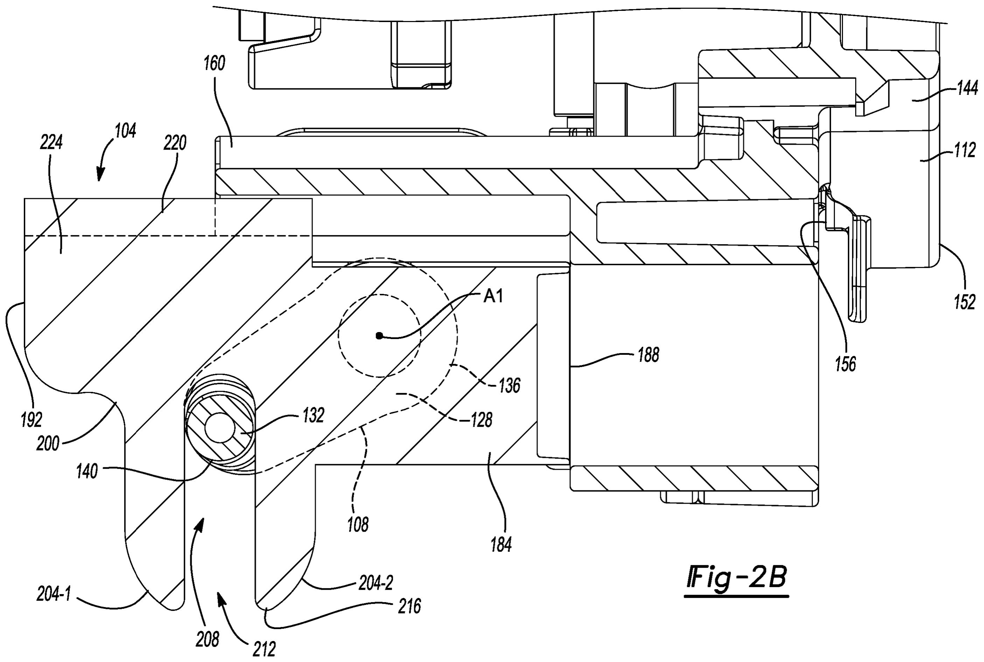

The charging receptacle 116 may define a charging port 124. In used, the charging port 124 may receive the charger (not shown). In the assembled configuration (FIG. 4), the lock tab 120 may be at least partially disposed within the charging port 124. As will be explained in more detail below, the lock tab 120 may move (e.g., translate) between an extended position (FIGS. 1A, 2A) and a retracted position (FIGS. 1B, 2B). In the extended position, the lock tab 120 may engage the charger and secure the charger within the charging port 124.

The release arm 108 may include a main body member 128 and a post 132 coupled to the main body member 128. The main body member 128 may include a first end 136 and a second end 140 opposite the first end 136. The main body member 128 may define an opening 142 proximate (e.g., adjacent or at) the first end 136. The post 132 may be disposed proximate (e.g., adjacent or at) the second end 140. The release arm 108 may rotate about a release axis A1.

In various implementations, the housing 112 includes a first housing member 144 and a second housing member 148. The first housing member 144 and the second housing member 148 may be coupled (e.g., detachably-coupled) to one another. In various implementations, the release assembly 104 is coupled (e.g., translatably-coupled) to the first housing member 144 and the release arm 108 is coupled (e.g., rotatably-coupled) to the second housing member 148. In various implementations, first housing member 144 and/or the second housing member 148 are coupled (e.g., detachably-coupled) to the charging receptacle 116.

The first housing member 144 may include a first side 152, a second side 156 opposite the first side 152, and a guide portion 160 extending from the second side 156. The first housing member 144 may define an opening 164. The guide portion 160 may define a channel 168. The channel 168 may be in communication (e.g., fluid communication) with the opening 164. The channel 168 may extend through the guide portion 160 and the first and second sides 152, 156 of the first housing member 144. The channel 168 may define a first portion 172 and a second portion 176. In various implementations, the first portion 172 is disposed above the second portion 176. In various implementations, the first portion 172 defines a first width W1 and the second portion 176 defines a second width W2. In various implementations, the first width W1 is greater than the second width W2.

In various implementations, a lubricant is disposed upon the first housing member 144 (e.g., the channel 168, or the first and second portions 172, 176). In various implementations, the lubricant reduces an amount of friction between the first housing member 144 and the release assembly 104. In various implementations, the lubricant is a dry Teflon lubricant or other similar type of lubricant.

The second housing member 148 may include a boss 180. In various implementations, the lock tab 120 is at least partially disposed in the second housing member 148. The boss 180 may be coupled (e.g., operatively-coupled) to the lock tab 120. As will be explained in more detail below, the release arm 108 may be coupled to the boss 180 and rotation of the release arm 108 may urge movement of the lock tab 120. In various implementations, the boss 180 is disposed within the opening 164 of the release arm 108.

The release assembly 104 may include an interactive member 184 having a first end 188 and a second end 192 opposite the first end. In the assembled configuration (FIG. 4), the interactive member 184 may be at least partially disposed in the guide portion 160 of the first housing member 144. The interactive member 184 may be translatable relative to the first housing member 144 between a first position (FIGS. 1A, 2A) and a second position (FIGS. 1B, 2B). In various implementations, the interactive member 184 translates from the first position (FIGS. 1A, 2A) to the second position (FIGS. 1B, 2B) along a longitudinal axis A2. In the first position (FIGS. 1A, 2A), the first end 188 of the interactive member 184 is exposed at the first side 152 of the first housing member 144. In various implementations, in the first position (FIGS. 1A, 2A), the first end 188 of the interactive member 184 is flush with the first side 152 of the first housing member 144. In the second position (FIGS. 1B, 2B), the first end 188 of the interactive member 184 is disposed within the first housing member 144 (e.g., the guide portion 160). As will be explained in more detail below, a person (e.g., a driver of the vehicle) may impart a force on the first end 188 to move the interactive member 184 from the first position (FIGS. 1A, 2A) to the second position (FIGS. 1B, 2B).

The second end 192 of the interactive member 184 may include a receiver 196 that may engage (e.g., movably-engages) the release arm 108 (e.g., the post 132). As will be explained in more detail below, as the interactive member 184 moves from the first position (FIGS. 1A, 2A) to the second position (FIGS. 1B, 2B), engagement of the receiver 196 with the release arm 108 (e.g., the post 132) may move (e.g., rotate) the release arm 108 from a locked position (FIGS. 1A, 2A) to an unlocked position (FIGS. 1B, 2B).

In various implementations, the receiver 196 is or includes a yoke 200 that receives (e.g., rotatably-receives) the release arm 108 (e.g., the post 132). As will be explained in more detail below, as the interactive member 184 translates along the longitudinal axis A2 from the first position (FIGS. 1A, 2A) to the second position (FIGS. 1B, 2B), engagement of the yoke 200 with the release arm 108 (e.g., the post 132) may move (e.g., rotate) the release arm 108 from the locked position (FIGS. 1A, 2A) to the unlocked position (FIGS. 1B, 2B).

The yoke 200 may include a first arm 204-1 and a second arm 204-2 that is spaced apart from the first arm 204-1 such that the first and second arms 204-1, 204-2 define a slot 208 therebetween. In various implementations, the slot 208 forms an opening 212 at a first end 216 of the yoke 200. In various implementations, the release arm 108 (e.g., the post 132) may be disposed within the slot 208. In various implementations, the first arm 204-1 and the second arm 204-2 extend from the second end 192 of the interactive member 184 in a direction transverse to the longitudinal axis A2. In various implementations, the first arm 204-1 and the second arm 204-2 extend from the second end 192 of the interactive member 184 in a direction substantially (e.g., ±10 degrees) perpendicular to the longitudinal axis A2.

In various implementations, the interactive member 184 is at least partially disposed in the channel 168. The interactive member 184 may include a flange portion 220 and a tail portion 224 extending from the flange portion 220. The flange portion 220 may define a third width W3 and the tail portion 224 may define a fourth width W4. The third width W3 may be greater than the fourth width W4. The third width W3 may be equal to the first width W1 and the fourth width W4 may be equal to the third width W3. In various implementations, the flange portion 220 is at least partially disposed in the first portion 172 of the channel 168 and the tail portion 224 is at least partially disposed in the second portion 176 of the channel 168.

A method of operating the release assembly 104 will be described in more detail below. To start, the vehicle may be in a charging state. In this regard, the charger may be disposed in the charging port 124 and the lock tab 120 may be in the extended position (FIGS. 1A, 2A). The lock tab 120 may secure the charger within the charging port 124. Further, the release arm 108 may be in the locked position (FIGS. 1A, 2A) and the release assembly 104 (for example, the interactive member 184) may be in the first position (FIGS. 1A, 2A). A person (e.g., the driver of the vehicle) may desire to remove the charger from the charging port 124 - for example, in response to an emergency situation, such as the release mechanism on the charger being inoperable or to quickly prevent an overcharging scenario. To actuate the release assembly 104, the person may impart a force on the first end 188 of the interactive member 184. For example, the person may push on the first end 188 using their finger, hand, or other body part, or a key, a plunger, a button attached to the first end 188, or any other tool. This force may move (e.g., translate) the interactive member 184 from the first position (FIGS. 1A, 2A) to the second position (FIGS. 1B, 2B). For example, the interactive member 184 may translate from the first position (FIGS. 1A, 2A) to the second position (FIGS. 1B, 2B) along the longitudinal axis A2. Movement of the interactive member 184 from the first position (FIGS. 1A, 2A) to the second position (FIGS. 1B, 2B) may cause movement (e.g., rotation) of the release arm 108 from the locked position (FIGS. 1A, 2A) to the unlocked position (FIGS. 1B, 2B) about the release axis A1. Movement of the release arm 108 from the locked position (FIGS. 1A, 2A) to the unlocked position (FIGS. 1B, 2B) may cause movement (e.g., translation) of the lock tab 120 from the extended position (FIGS. 1A, 2A) to the retracted position (FIGS. 1B, 2B). In the retracted position, the lock tab 120 disengages from the charger, thereby allowing the charger to be released from the charging port 124 (e.g., by the person).

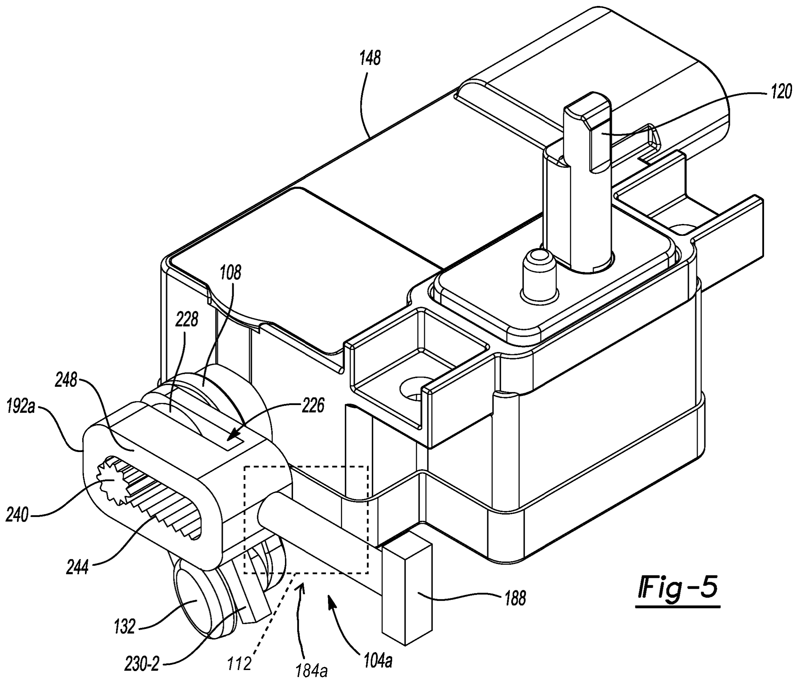

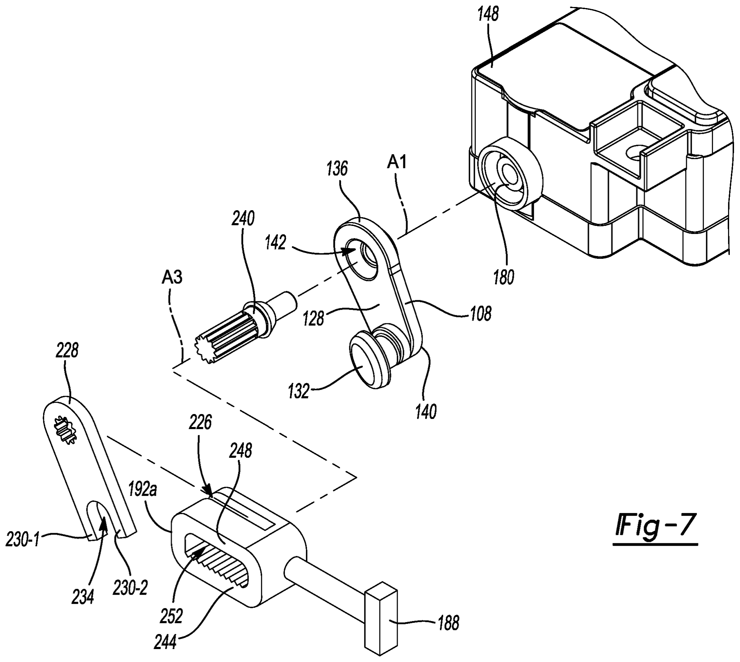

Referring to FIGS. 5, 6A, 6B, and 7, another release assembly 104a is shown. As will be explained in more detail below, the release assembly 104a may be used in place of the release assembly 104 in the charging system 100. In view of the substantial similarity in structure and function of the components associated with the release assembly 104a relative to the release assembly 104, like reference numerals are used hereinafter, and in the drawings, to identify like components while like reference numerals containing letter extensions (e.g., "a") are used to identify those components that have been modified.

The release assembly 104a may include an interactive member 184a and an intermediate arm 228. The intermediate arm 228 may be coupled (e.g., movably-coupled) to the interactive member 184a and coupled (e.g., rotatably-coupled) to the release arm 108. In various implementations, the interactive member 184a includes a slot 226 and the intermediate arm 228 is disposed in the slot 226. The intermediate arm 228 may include a proximal end 232 and a distal end 236 opposite the proximal end 232. The proximal end 232 may be coupled (e.g., rotatably-coupled) to the release arm 108. The proximal end 232 may include a first arm 230-1 and a second arm 230-2 spaced apart from the first arm 230-1 such that the first and second arms 230-1, 230-2 define a slot 234 therebetween. In various implementations, the release arm 108 (e.g., the post 132) may be disposed within the slot 234. The distal end 236 may define an opening 238.

In various implementations, the release assembly 104a includes a pinion gear 240 defining a pinion axis A3. In various implementations, the pinion axis A3 is coaxial with the release axis A1. As will be explained in more detail below, the pinion gear 240 may movably-engage the interactive member 184a and the intermediate arm 228, such that translation of the interactive member 184a causes rotation of the intermediate arm 228.

The interactive member 184a may include the first end 188 and a second end 192a. The second end 192a may include a gear rack 244 and an upper portion 248 spaced apart from the gear rack 244. The gear rack 244 and the upper portion 248 may define an opening 252 therebetween. In various implementations, the pinion gear 240 may be disposed and secured within the opening 252. The gear rack 244 may engage (e.g., meshingly-engage) the pinion gear 240 such that translation of the interactive member 184a along the longitudinal axis A2 urges movement (e.g., rotation) of the pinion gear 240 about the pinion axis A3.

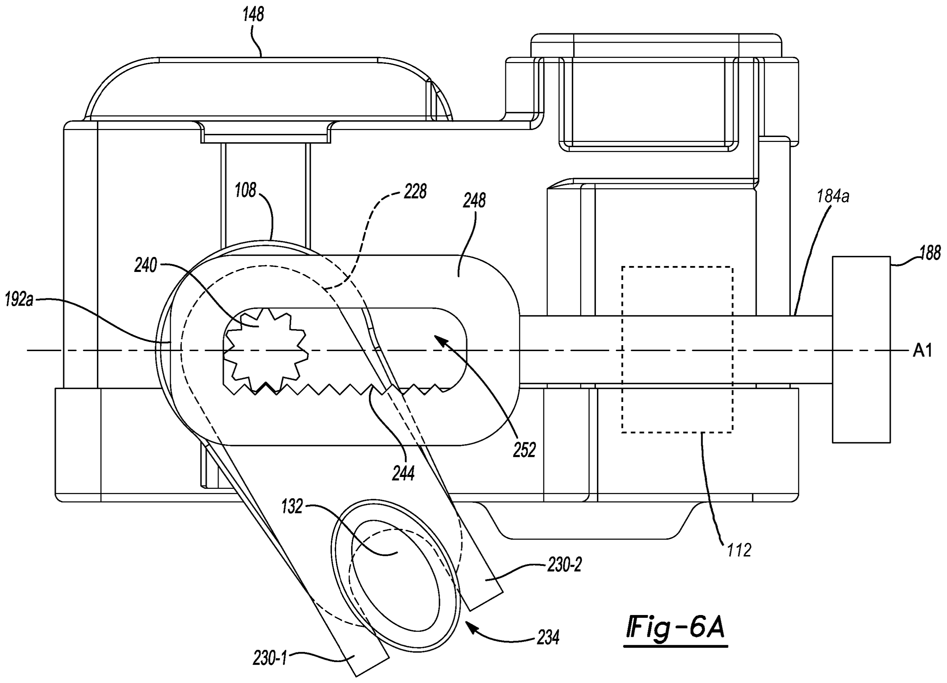

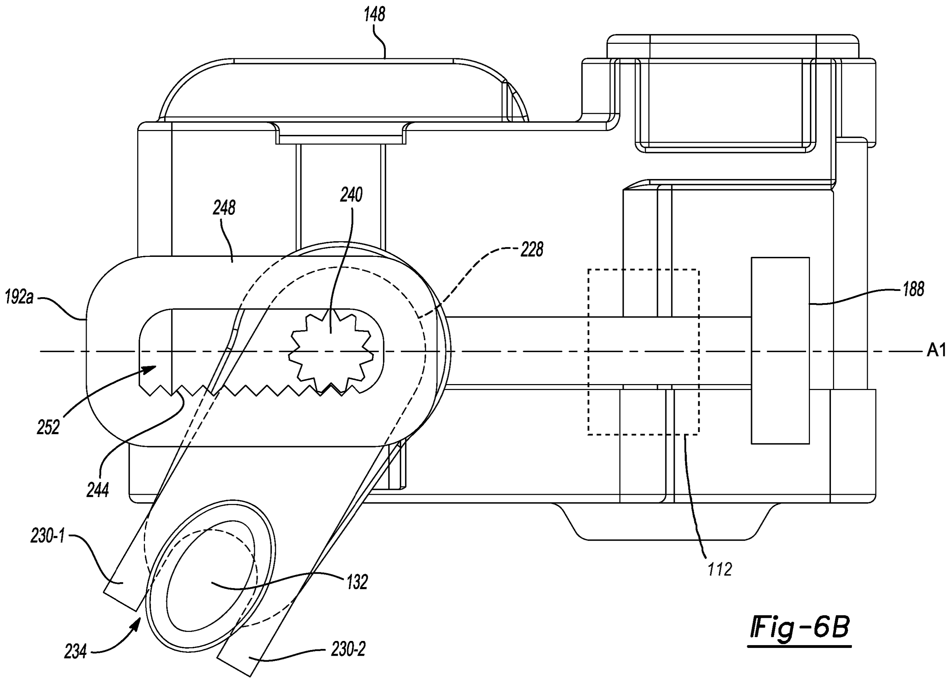

A method of operating the release assembly 104a will be described in more detail below. To start, the vehicle may be in a charging state. In this regard, the charger may be disposed in the charging port 124 and the lock tab 120 may be in the extended position (FIG. 6A). The lock tab 120 may secure the charger within the charging port 124. Further, the release arm 108 may be in the locked position (FIG. 6A) and the release assembly 104a (for example, the interactive member 184a) may be in the first position (FIG. 6A). A person (e.g., the driver of the vehicle) may desire to remove the charger from the charging port 124 - for example, in response to an emergency situation, such as the release mechanism on the charger being inoperable or to quickly prevent an overcharging scenario. To actuate the release assembly 104a, the person may impart a force on the first end 188 of the interactive member 184a. For example, the person may push on the first end 188 using their finger, hand, or other body part, or a key, a plunger, a button attached to the first end 188, or any other tool. This force may move (e.g., translate) the interactive member 184a from the first position (FIG. 6A) to the second position (FIG. 6B). For example, the interactive member 184a may translate from the first position (FIG. 6A) to the second position (FIG. 6B) along the longitudinal axis A2. Movement of the interactive member 184a from the first position (FIG. 6A) to the second position (FIG. 6B) may cause movement (e.g., rotation) of the intermediate arm 228 about the pinion axis A3 from a start position (FIG. 6A) to an end position (FIG. 6B). Movement of the intermediate arm 228 about the pinion axis A3 from a start position (FIG. 6A) to an end position (FIG. 6B) may cause movement (e.g., rotation) of the release arm 108 from the locked position (FIG. 6A) to the unlocked position (FIG. 6B) about the release axis A1. Movement of the release arm 108 from the locked position (FIG. 6A) to the unlocked position (FIG. 6B) may cause movement (e.g., translation) of the lock tab 120 from the extended position (FIGS. 1A, 2A) to the retracted position (FIGS. 1B, 2B). In the retracted position, the lock tab 120 disengages from the charger, thereby allowing the charger to be released from the charging port 124 (e.g., by the person).

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Unless indicated otherwise, numbering, or other labeling of instructions or method steps is done for convenient reference, not to indicate a fixed order.

Numerical terms, such as "first," "second," and "third," may be used in the disclosure and claims as unique labels: they are not used to imply a sequence or order unless the context clearly indicates otherwise. In other words, a "second" element could be relabeled as a "first" element without departing from the principles of the present disclosure. Further, the presence of a "second" element does not imply or require the presence of a "first" element. Similarly, the presence of a "first" element does not imply or require the presence of a "second" element.

Unless the context clearly indicates otherwise, the singular articles "a," "an," and "the" before a noun do not restrict the noun to a single instance. The verbs "comprise," "include," and "have" are inclusive and therefore specify the presence of elements without excluding the presence of one or more additional elements.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements are described using various terms, including "connected," "coupled," "engaged," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

The term "set" generally means a grouping of one or more elements. The elements of a set do not necessarily need to have any characteristics in common or otherwise belong together. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR. The phrase "A, B, and/or C" should be construed in the same way as the phrase "at least one of A, B, and C."

The examples of the present disclosure may include one or more components such as connectors, terminals, conductors, insulating members, shielding structures, housings, retention features, and sealing elements, among others, as well as corresponding systems and assemblies. These examples may be configured to facilitate electrical signal transmission, power delivery, electromagnetic compatibility, or mechanical retention under various environmental conditions, such as thermal cycling, vibration, or exposure to fluids. Disclosed components, systems, and assemblies, among others, may be arranged modularly or integrally to accommodate various system architectures and routing constraints.

Disclosed components may be fabricated from thermoplastics, thermoset resins, composites, or metals, optionally treated, or coated for corrosion resistance, electromagnetic interference shielding, or biocompatibility for use in various applications, system, and environments, among others. In particular, in medical applications, sterilizable and/or biocompatible materials may be used. In solar or renewable energy systems, UV-resistant and/or weatherproof materials may be incorporated. In aerospace and space-based systems, weight reduction may be prioritized, and high-performance materials such as polyimide films, fluoropolymers, or ceramic composites may be employed.

Disclosed components, systems, and assemblies, among others, may be designed for automated assembly, including robotic insertion, ultrasonic welding, or crimping techniques. Adaptations may be made to ensure compliance with relevant standards, including International Organization for Standardization, Military Specification, Society of Automotive Engineers, Food and Drug Administration, or International Electrotechnical Commission, depending on the target industry or market. In this regard, while examples and embodiments of the present disclosure may be illustrated and described herein in the context of an automobile, it will be appreciated that such examples and embodiments are equally suited for other applications, systems, environments, industries, and markets, among others. For example, implementations of the present disclosure that relate generally to electrical components and assemblies, and more particularly to connectors, terminals, wiring harnesses, and integrated electrical interconnection systems, among others, are suitable for a wide range of environments and applications.

While exemplary embodiments described herein may reference automotive use cases, the disclosed technology is not limited thereto and may be employed in any system requiring, for example, robust, secure, reliable, and/or durable electrical connectivity, among others. In particular, the structures, materials, and configurations disclosed may be adapted for use in aerospace systems, medical devices, consumer electronics, industrial automation, energy distribution networks, solar and other renewable energy installations, marine vessels, and space exploration platforms. Accordingly, although specific embodiments may describe automotive implementations, the principles disclosed herein are equally applicable to any system requiring robust electrical interconnection, and claims directed to any system, application, and/or environmental domain are, and will be, contemplated by one of skill in the art.

Various example embodiments of the invention are described in the following clauses.

Clause 1: A release assembly comprising: an interactive member configured to be partially disposed within a guide portion of a housing and translatable relative to the housing between a first position and a second position, the interactive member including a first end and a second end, the first end configured to be exposed at a first side of the housing, the second end including a receiver configured to movably-engage a release arm to move the release arm from a locked position to an unlocked position when moved from the first position to the second position.

Clause 2: The release assembly of clause 1 wherein the second end includes a yoke configured to rotatably receive the release arm such that translation of the interactive member along a longitudinal axis causes rotation of the release arm about a release axis.

Clause 3: The release assembly of clause 2 wherein: the yoke includes a first arm and a second arm spaced apart from the first arm, and the first arm and the second arm define a slot forming an opening at a first end of the yoke.

Clause 4: The release assembly of clause 3 wherein the first arm and the second arm extend from the second end of the interactive member in a direction transverse to the longitudinal axis.

Clause 5: The release assembly of any of clauses 1-4 further comprising the housing, wherein: the housing defines a channel extending through a proximal side of the housing and a distal side of the housing, and the interactive member is disposed within the channel.

Clause 6: The release assembly of clause 5 wherein: the interactive member includes a flange portion and a tail portion extending from the flange portion, the channel defines a first portion and a second portion, the flange portion is disposed within the first portion, and the tail portion is disposed within the second portion.

Clause 7: The release assembly of clause 6 wherein: the first portion defines a first width, and the second portion defines a second width that is smaller than the first width.

Clause 8: The release assembly of any of clauses 5-7, further comprising a lubricant disposed upon the housing and configured to reduce an amount of friction between the housing and the interactive member.

Clause 9: The release assembly of any of clauses 1-8 further comprising: an intermediate arm having a proximal end rotatably coupled to the release arm and a distal end defining an aperture; and a pinion gear disposed in the aperture, wherein the second end includes a gear rack meshingly-engaged with the pinion gear such that translation of the interactive member along a longitudinal axis causes rotation of the pinion gear about a pinion axis.

Clause 10: The release assembly of clause 9 wherein translation of the interactive member along the longitudinal axis causes rotation of the release arm about a release axis.

Clause 11: The release assembly of clause 10 wherein the pinion axis and the release axis are coaxial.

Clause 12: The release assembly of any of clauses 9-11 wherein: the second end includes an upper portion spaced apart from the gear rack, the upper portion and the gear rack define an opening, and the opening is configured to secure the pinion gear.

Clause 13: The release assembly of any of clauses 1-12 wherein: the housing is configured to be coupled to a charging receptacle, and the release arm is rotatably-coupled to the housing.

Clause 14: The release assembly of clause 13 wherein: the charging receptacle defines a charging port configured to receive a charger, the release arm is operatively coupled to a lock tab configured to secure the charger within the charging port when the release arm is in the locked position, and the interactive member is configured to release the charger from the charging port in the second position.

Clause 15: The release assembly of any of clauses 1-14 wherein the first end of the interactive member is flush with the first side of the housing.

Clause 16: A charging system comprising: the release assembly of any of clauses 1-15; the release arm; and a charging receptacle defining a charging port configured to receive a charger, wherein: the housing is coupled to the charging receptacle, and the release arm is rotatably-coupled to the housing.

Clause 17: The charging system of clause 16 further comprising a lock tab at least partially disposed within the charging port and operatively coupled to the release arm, wherein the lock tab is configured to move from an extended position to a retracted position when the release arm moves from the locked position to the unlocked position.

Clause 18: The charging system of clause 17 wherein the lock tab is configured to engage the charger to secure the charger within the charging port in the extended position.

Clause 19: The charging system of clause 18 wherein the release arm includes a post configured to rotatably-engage the receiver.

Clause 20: A vehicle comprising the charging system (100) of any of clauses 16-19.

## Claims

1. A release assembly (104, 104a) comprising:
an interactive member (184, 184a) configured to be partially disposed within a guide portion (160) of a housing (112) and translatable relative to the housing (112) between a first position and a second position, the interactive member (184, 184a) including a first end and a second end, the first end configured to be exposed at a first side (152) of the housing (112), the second end including a receiver (196) configured to movably-engage a release arm (108) to move the release arm (108) from a locked position to an unlocked position when moved from the first position to the second position.

2. The release assembly (104, 104a) of claim 1 wherein the second end includes a yoke (200) configured to rotatably receive the release arm (108) such that translation of the interactive member (184, 184a) along a longitudinal axis causes rotation of the release arm (108) about a release axis.

3. The release assembly (104, 104a) of claim 2 wherein:
the yoke (200) includes a first arm and a second arm spaced apart from the first arm, and
the first arm and the second arm define a slot forming an opening at a first end of the yoke (200),
wherein preferably the first arm and the second arm extend from the second end of the interactive member (184, 184a) in a direction transverse to the longitudinal axis.

4. The release assembly (104, 104a) of any one of the preceding claims further comprising the housing (112), wherein:
the housing (112) defines a channel (168) extending through a proximal side of the housing (112) and a distal side of the housing (112), and
the interactive member (184, 184a) is disposed within the channel (168).

5. The release assembly (104, 104a) of claim 4 wherein:
the interactive member (184, 184a) includes a flange portion (220) and a tail portion (224) extending from the flange portion (220),
the channel (168) defines a first portion (172) and a second portion (176),
the flange portion (220) is disposed within the first portion (172), and
the tail portion (224) is disposed within the second portion (176), wherein preferably:
the first portion (172) defines a first width, and
the second portion (176) defines a second width that is smaller than the first width.

6. The release assembly (104, 104a) of claim 4 or 5, further comprising a lubricant disposed upon the housing (112) and configured to reduce an amount of friction between the housing (112) and the interactive member (184, 184a).

7. The release assembly (104, 104a) of any one of the preceding claims further comprising:
an intermediate arm (228) having a proximal end (232) rotatably coupled to the release arm (108) and a distal end (236) defining an aperture; and
a pinion gear (240) disposed in the aperture, wherein the second end includes a gear rack (244) meshingly-engaged with the pinion gear (240) such that translation of the interactive member (184, 184a) along a longitudinal axis causes rotation of the pinion gear (240) about a pinion axis.

8. The release assembly (104, 104a) of claim 7 wherein translation of the interactive member (184, 184a) along the longitudinal axis causes rotation of the release arm (108) about a release axis.

9. The release assembly (104, 104a) of claim 7 or 8 wherein the pinion axis and the release axis are coaxial.

10. The release assembly (104, 104a) of any one of claims 7 to 9 wherein:
the second end includes an upper portion (248) spaced apart from the gear rack (244),
the upper portion (248) and the gear rack (244) define an opening, and
the opening is configured to secure the pinion gear (240).

11. The release assembly (104, 104a) of any one of the preceding claims wherein:
the housing (112) is configured to be coupled to a charging receptacle (116), and
the release arm (108) is rotatably-coupled to the housing (112).

12. The release assembly (104, 104a) of claim 11 wherein:
the charging receptacle (116) defines a charging port (124) configured to receive a charger,
the release arm (108) is operatively coupled to a lock tab (120) configured to secure the charger within the charging port (124) when the release arm (108) is in the locked position, and
the interactive member (184, 184a) is configured to release the charger from the charging port (124) in the second position.

13. A charging system (100) comprising:
the release assembly (104, 104a) of any one of the preceding claims;
the release arm (108); and
a charging receptacle (116) defining a charging port (124) configured to receive a charger, wherein:
the housing (112) is coupled to the charging receptacle (116), and
the release arm (108) is rotatably-coupled to the housing (112).

14. The charging system (100) of claim 13 further comprising a lock tab (120) at least partially disposed within the charging port (124) and operatively coupled to the release arm (108), wherein the lock tab (120) is configured to move from an extended position to a retracted position when the release arm moves from the locked position to the unlocked position,
wherein preferably the lock tab (120) is configured to engage the charger to secure the charger within the charging port (124) in the extended position, and
wherein preferably the release arm (108) includes a post (132) configured to rotatably-engage the receiver (196).

15. A vehicle comprising the charging system (100) of claim 13 or 14.
